# EUROPÄISCHE PATENTSCHRIFT

(11) **EP 0 385 161 B1**
(45) Veröffentlichungstag und Bekanntmachung des Hinweises auf die Patenterteilung: **21.04.1993**
(21) Anmeldenummer: 90102649.2
(22) Anmeldetag: 10.02.1990
(51) Int. Cl.: B60J 1/00

(54) **Vorrichtung zur Positionierung einer Kraftfahrzeugscheibe**
Device for positioning a pane of a motor vehicle
Dispositif pour positionner une vitre de véhicule

(30) Priorität: 28.02.1989 DE 3906181
(43) Veröffentlichungstag der Anmeldung: 05.09.1990
(73) Patentinhaber: Adam Opel Aktiengesellschaft, 65428 Rüsselsheim (DE); General Motors Espana, S.A., Figueruelas (Zaragoza) (ES)
(72) Erfinder: Feldmann, Franz, Dipl.-Ing. (FH), D-6531 Grolsheim (DE)
(74) Vertreter: Bergerin, Ralf, Dipl.-Ing.

(56) Entgegenhaltungen:
- DE-A- 3 028 698
- DE-A- 3 243 101
- DE-A- 3 410 679
- DE-A- 3 433 784
- DE-A- 3 543 815
- DE-C- 3 422 299

## Beschreibung

Die Erfindung betrifft eine Vorrichtung zur Positionierung einer Kraftfahrzeugscheibe, insbesondere Windschutz- oder Heckscheibe in einer karosserieseitigen Fassung unter Zwischenschaltung eines umlaufenden, elastischen Abdichtprofils mittels auf den unteren Scheibenrand einwirkender, die Höhenposition der Scheibe gegenüber im unteren Bereich derselben befindlichen Karosserieelementen einstellbar festlegbarer Halteelemente.

Eine derartige Vorrichtung zur Positionierung einer Kraftfahrzeugscheibe in einer Scheibenfassung ist nach DE-A-32 43 101 bereits bekannt. Die Scheibe wird hier in ihre Einbaustellung und dann mittels an der Karosserie angebrachten Exzentern durch Verdrehen derselben in ihre Endstellung gebracht und durch Eintreiben eines Stiftes in eine Spreizeinrichtung festgeklemmt. Das Verdrehen des Exzenters erfolgt mittels eines an den Exzenter ansetzbaren Spezialwerkzeugs.

Weiterhin bekannt ist gemäß DE-A-34 10 679 eine Vorrichtung bestehend aus zwei Halteelementen, die ein schräg verlaufendes Langloch aufweisen, das mit fest an der Karosserie aufgeschweißten Bolzen zusammenwirkt. Durch Verschieben der Halteelemente wird die Scheibe fixiert.

In beiden Fällen soll bewirkt werden, daß die Kraftfahrzeugscheibe so lange in ihrer Einbauposition gehalten wird, bis der Kleber, der die Scheibe endgültig in dem Fensterausschnitt halten soll, abgebunden hat.

Es hat sich jedoch in der Praxis gezeigt, daß bei den Halteelementen nach dem genannten Stand der Technik keine sichere Halterung der Fahrzeugscheibe während der Abbindezeit des Klebers in der Montage gewährleistet ist, da durch die Erschütterungen, denen das Fahrzeug auf dem Fertigungsband ausgesetzt ist und den Druck, den die Scheibe dabei auf die Halteelemente ausübt, der Exzenter zum Verdrehen neigt bzw. das Halteelement mit dem Langloch im Zusammenwirken mit den Bolzen verrutscht.

Aufgabe der Erfindung ist daher die Schaffung eines Halteelementes, das einerseits die fertigungsbedingten Toleranzen zwischen der Unterkante der eingebauten, aber noch nicht fest verklebten Fahrzeugscheibe und dem Karosserieflansch ausgleicht und andererseits die Fahrzeugscheibe während der Aushärtezeit des Klebers sicher in der endgültigen Position hält.

Gelöst wird diese Aufgabe durch Halteelemente gemäß Anspruch 1.

Bei einer solchen Positioniereinrichtung wird die Scheibe in die Scheibenfassung gebracht und zwar derart, daß sie zum Dachholmen bündig anliegt; sodann werden die Halteelemente an zwei weit auseinander liegenden Stellen derart zwischen Scheibenunterkante und Karosserieflansch gelegt, daß sie die Scheibe möglichst paßgenau unterstützen.

Es ist in vorteilhafter weiterer Ausgestaltung des Halteelementes natürlich auch möglich, diese etwa mittig, mit Spiel auf einem an der Karosserie befestigten Bolzen zu positionieren. Dies hat den Vorteil, daß die Lage des Halteelementes, in einem Abstand von der Fahrzeug-Mittelachse, genau bestimmt ist.

Eine Feinabstimmung kann dann durch ein in eine Aufnahme eingeführtes Werkzeug, z. B. einen Schraubendreher, durch Drehen erfolgen, wobei die zwei Flächen des Halteelementes zur Anlage gelangen, deren Abstand zueinander den Abstand zwischen Scheibenunterkante und Karosserieflansch ausmacht. Bei Halteelementen mit ungerader Eckenzahl kann auch nur eine Fläche und eine Ecke zur Anlage gelangen. Erschütterungen der Karosserie bei ihrer Fortbewegung auf dem Montageband können der Lage der Scheibe nun nichts mehr anhaben. Die Verklebung der Kraftfahrzeugscheibe kann sicher aushärten.

Vorteilhafte weitere Ausgestaltungen sind den Unteransprüchen zu entnehmen.

Zur Verdeutlichung des Prinzips ist eine der zahlreichen möglichen Ausführungsformen in der Zeichnung dargestellt.

Es zeigen:
- Fig. 1: Die Heckpartie eines Personenkraftfahrzeuges in Draufsicht auf die Heckscheibe mit den erfindungsgemäßen Halteelementen.
- Fig. 2: Eine vergrößerte Darstellung des Bereiches A in Figur 1.
- Fig. 3: Einen Schnitt entlang der Linie III-III in Figur 2 mit auf die Scheibe aufgezogener Abdecklippe.

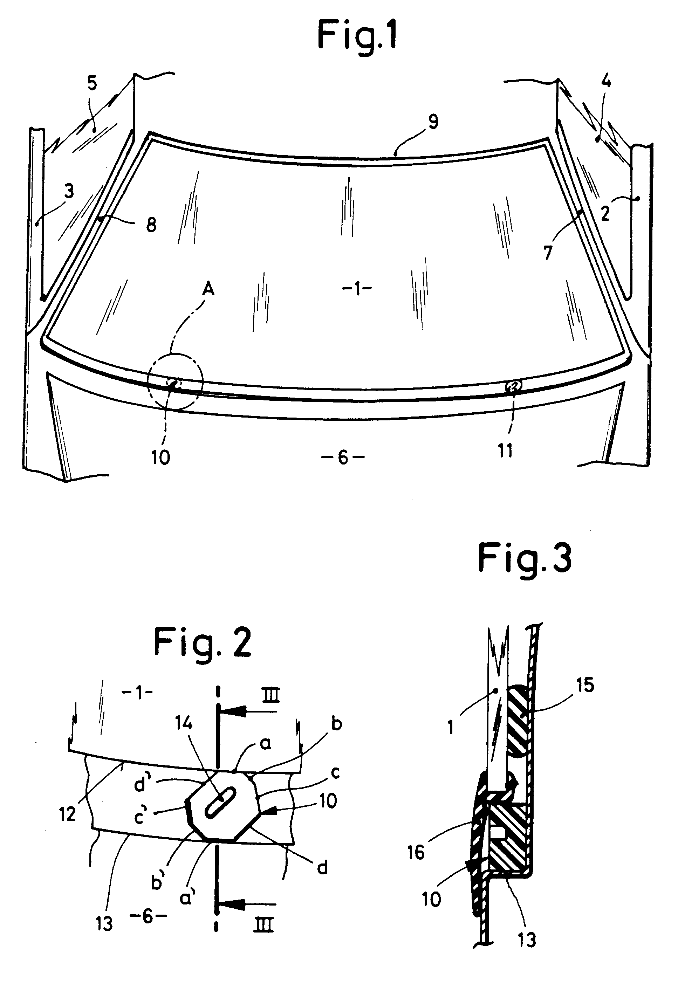

In Figur 1 ist eine Heckscheibe 1 dargestellt. Teilweise zu erkennen sind Türen 2, 3 mit Seitenfenstern 4, 5. Mit 6 ist ein Kofferraumdeckel bezeichnet. Die Heckscheibe 1 reicht seitlich bis an Dachholme 7, 8 und nach oben hin bis zum Fahrzeugdach 9. Die Befestigung der Heckscheibe erfolgt durch Kleben. Zum genauen Positionieren der Scheibe vor der Verklebung dienen zwei Halteelemente 10, 11, deren Gestaltung Gegenstand der Erfindung ist.

Figur 2 läßt in vergrößerter Darstellung den Bereich A in Figur 1 erkennen. Zwischen der Scheibenunterkante 12 und dem Karosserieflansch 13 ist das Halteelement 10 angeordnet; im dargestellten Falle ein Achteck mit vier einander gegenüberliegenden Flächenpaaren a-a'; b-b'; c-c'; d-d'. Alle diese Flächenpaare weisen zueinander unterschiedliche Abstände auf, so daß beim Verdrehen des Halteelementes 10, z. B. mittels eines Schraubendrehers, in einem Schlitz 14 vier verschiedene Abstände zwischen Scheibenunterkante 12 und Karosserieflansch 13 überbrückt werden können und die Scheibe 1 sicher aufliegt und auch durch Erschütterungen nicht mehr bewegt wird.

Die Darstellung nach Figur 3 zeigt neben der sicheren Auflage der Scheibe 1 auf dem Halteelement 10 und dessen Abstützung auf dem Karosserieflansch 13 die Klebstoffraupe 15 und eine Abdichtlippe 16, welche die gesamte Scheibe umspannt und den Schlitz zwischen Kraftfahrzeugscheibe und angrenzendem Karosserieteil optisch sauber überbrückt und auch die Halteelemente dem Betrachter entzieht.

## Patentansprüche

1. Vorrichtung zum Positionieren einer Kraftfahrzeugscheibe, insbesondere Windschutz- oder Heckscheibe in einer karosserieseitigen Fassung unter Zwischenschaltung eines umlaufenden, elastischen Abdichtprofils mittels auf den unteren Scheibenrand einwirkender, die Höhenposition der Scheibe gegenüber im unteren Bereich derselben befindlichen Karosserieelementen einstellbar festlegbarer Halteelemente, dadurch gekennzeichnet, daß sich die Halteelemente (10) unmittelbar an einem unterhalb der Scheibe befindlichen Karosserieflansch (13) abstützen und aus senkrecht prismatischen Körpern mit parallel zur Scheibenebene gerichteten, unregelmäßigen polygonalen Grundflächen und mehreren, einander jeweils parallel gegenüberliegender Seitenflächen (a-a'; b-b'; c-c'; d-d') bestehen.

2. Halteelement nach Anspruch 1, dadurch gekennzeichnet, daß die Abstände zwischen einander jeweils gegenüberliegenden Seitenflächen verschieden groß sind und in ihrer Gesamtheit den Toleranzbereich zwischen Scheibenunterkante (12) und Karosserieflansch (13) stufenweise abdecken.

3. Halteelement nach Anspruch 1 oder 2, dadurch gekennzeichnet, daß die Eckenanzahl der polygonalen Grundflächen bzw. die Anzahl der Seitenflächen (a-a'; b-b'; c-c'; d-d') gerade ist.

4. Halteelement nach mindestens einem der Ansprüche 1 bis 3, dadurch gekennzeichnet, daß es mit Aufnahmemitteln (14) für ein Werkzeug zum Verdrehen in einer zu seinen Grundflächen parallelen Ebene versehen ist.

5. Halteelement nach Anspruch 4, dadurch gekennzeichnet, daß es etwa mittig, mit Spiel auf einem an der Karosserie befestigten Bolzen positioniert ist.

## Claims

1. Device for positioning a motor vehicle window, in particular a windscreen or rear window in a body frame with the interposition of a peripheral elastic sealing profile by means of holding elements which act on the lower edge of the window and adjustably fix the height position of the window relative to body elements located in the lower region thereof, characterised in that the holding elements (10) are directly supported on a body flange (13) located beneath the window and consist of vertically prismatic bodies with irregular polygonal bases oriented parallel to the plane of the window and several side faces (a-a'; b-b'; c-c'; d-d') parallel and opposite each other respectively.

2. Holding element according to claim 1, characterised in that the distances between respectively opposed side faces vary, and in their totality cover stepwise the tolerance zone between the lower edge (12) of the window and the body flange (13).

3. Holding element according to claim 1 or 2, characterised in that the number of corners of the polygonal bases or the number of side faces (a-a'; b-b'; c-c'; d-d') is even.

4. Holding element according to one or more of claims 1 to 3, characterised in that it is provided with receiving means (14) for a tool for turning in a plane parallel to its bases.

5. Holding element according to claim 4, characterised in that it is positioned approximately centrally, with play on a bolt attached to the body.

## Revendications

1. Dispositif de positionnement d'une vitre d'un véhicule à moteur, notamment d'un pare-brise ou d'une vitre de lunette arrière, dans un cadre côté carrosserie, en intercalant un joint d'étanchéité périphérique profilé élastique, au moyen d'éléments de maintien agissant sur le bord inférieur de la vitre et pouvant être fixés de manière à régler la position en hauteur de la vitre par rapport à des éléments de carrosserie se trouvant dans la partie inférieure de la vitre, caractérisé en ce que les éléments de maintien (10) prennent appui directement sur un rebord (13) de la carrosserie situé au-dessous de la vitre et sont constitués par des corps en forme de prismes verticaux comportant des surfaces de base polygonales irrégulières, orientées parallèlement au plan de la vitre, et plusieurs faces latérales (a-a'; b-b'; c-c'; d-d') opposées parallèles.

2. Elément de maintien selon la revendication 1, caractérisé en ce que les distances entre des faces latérales respectives opposées sont différentes et couvrent dans leur totalité par paliers la sone de tolérance entre le bord inférieur (12) de la vitre et le rebord (13) de la carrosserie.

3. Elément de maintien selon la revendication 1 ou 2, caractérisé en ce que le nombre d'angles des surfaces de base polygonales ou le nombre de faces latérales (a-a'; b-b'; c-c'; d-d') est un nombre pair.

4. Elément de maintien selon au moins une des revendications 1 à 3, caractérisé en ce qu'il est muni de moyens de réception (14) pour un outil permettant de le faire tourner dans un plan parallèle à ses surfaces de base.

5. Elément de maintien selon la revendication 4, caractérisé en ce qu'il est approximativement centré, avec jeu, sur un axe fixé sur la carrosserie.
